# EUROPEAN PATENT SPECIFICATION

(11) **EP 1 186 521 B1**
(45) Date of publication and mention of the grant of the patent: **01.02.2006**
(21) Application number: 01119861.1
(22) Date of filing: 16.08.2001
(51) Int. Cl.: B62J 17/04

(54) **Windshield for vehicle**
Windschutzscheibe eines Fahrzeuges
Pare-brise de véhicule

(30) Priority: 06.09.2000 JP 2000270711
(43) Date of publication of application: 13.03.2002
(73) Proprietor: HONDA GIKEN KOGYO KABUSHIKI KAISHA, Minato-ku, Tokyo (JP)
(72) Inventor: Kurohori, Seiichi, 4-1 Chuo, 1-chome, Wako-shi, Saitama (JP); Ozeki, Takashi, 4-1 Chuo, 1-chome, Wako-shi, Saitama (JP); Furuta, Shinji, 4-1 Chuo, 1-chome, Wako-shi, Saitama (JP); Kobayashi, Hiroyoshi, 4-1 Chuo, 1-chome, Wako-shi, Saitama (JP); Takamoto, Hirosi, 4-1 Chuo, 1-chome, Wako-shi, Saitama (JP)
(74) Representative: Liska, Horst

(56) References cited:
- WO-A-99/16618
- FR-A- 1 255 486
- FR-A- 2 649 654
- US-A- 4 372 602
- US-A- 4 531 255
- US-A- 5 044 684
- US-A- 5 104 173

## Description

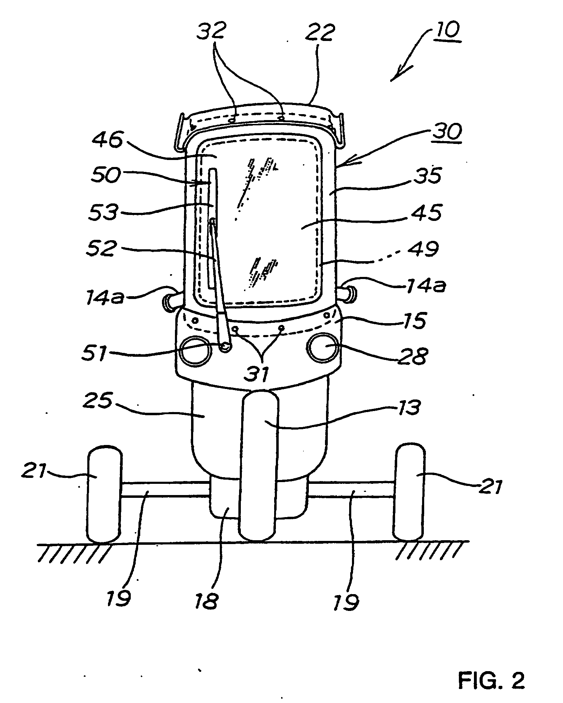

The present invention relates to a windshield for a vehicle which has a wiper-wiped surface to be wiped by a wiper.
For example, Japanese Utility Model Registration No. 2515092 titled "Frame Structure of Scooter Type Vehicle" proposes a front screen; FIG. 2 of the publication is re-printed herein, and the contents thereof are confirmed. In the figure re-printed, reference characters have been renewed.

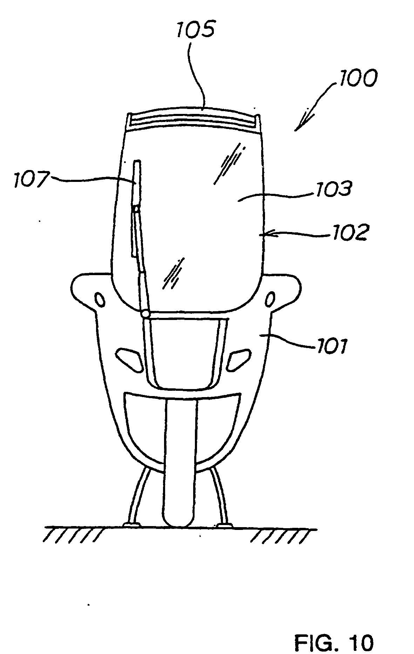

FIG. 10 is a front view of a conventional scooter type vehicle. The scooter type vehicle 100 is so constructed that a front screen (hereinafter, referred to as "windshield") 102 is mounted to a vehicle body cover 101, the top end of the windshield 102 is supported by a roof 105, and the surface 103 of the windshield 102 is wiped by a wiper 107.

Since the windshield 102 is a member formed from a transparent resin such as polycarbonate, it is lower in hardness than glass plate and is liable to flaw. In order to obviate the flawing, a hard coating is formed on the surface 103 of the windshield 102, thereby protecting the surface 103 of the windshield 102 from the woper 107. However, the hard coating is expensive, leading to a rise in the cost of the windshield 102.

In order to eliminate the need for the hard coating, it may be contemplated to form the windshield of a glass plate. When the windshield is formed of a glass plate, however, the weight of the windshield becomes large.

US 4 372 602 discloses a windshield in accordance with the preamble of claim 1.

Accordingly, it is an object of the present invention to provide a windshield for a vehicle which can eliminate the need for a hard coating and can restrain an increase in weight.

In order to attain the above project, there is provided a windshield main body molded from a transparent resin; a mounting portion for mounting said windshield main body to a vehicle main body; and a glass plate fastened to said windshield main body and including a front surface to be wiped by a wiper and a back surface, wherein said wind shield main body is provided with a recessed portion corresponding to the thickness of said glass plate, and said glass plate is fitted in said recessed portion, characterized in that the whole area of said back surface of said glass plate is fitted onto the whole area of said recessed portion.

The wiper-wiped surface is constituted of the glass plate, and the other portions are constituded of the transparent resin. Since the wiper-wiped surface is constituted of the glass plate, there is no anxiety of flawing.

As the glass plate is fastened to the windshield main body, whereby the glass plate can be wiped by the wiper. Therefore, the wiper-wiped surface can be constituted of the surface of the glass plate, so that the hardness of the wiper-wiped surface can be enhanced sufficiently. Accordingly, it is unnecessary to form a hard coating on the wiper-wiped surface.

In addition, since the glass plate is used for only the wiper-wiped surface of the windshield and the other portions are formed from a lightweight transparent resin, it is possible to restrain a rise in the weight of the windshield.

If the glass plate is bonded to only the frame of the shield main body, it suffices to bond only the outer periphery of the glass plate to the shield main body. Therefore, the glass plate can be easily bonded to the shield main body. Accordingly, cost can be suppressed.

By fitting the glass plate into the recessed portion of the shield main body, the entire surface of the glass plate can be bonded to the recessed portion. Therefore, the glass plate can be reinforced with the transparent resin, so that it is possible to reduce the thickness of the glass plate. Accordingly, the weight of the windshield can be reduced efficiently.

Herein after, embodiments of the present invention will be described with reference to the accompanying drawings.
FIG. 1 is a side view of a motor tricycle comprising a vehicular windshield.
FIG. 2 is a front view of the motor tricycle comprising the vehicular windshield.
FIG. 3 is a perspective view of the vehicular windshield which does not form part of the invention (first embodiment).
FIG. 4 is an exploded perspective view of the vehicular windshield according to the first embodiment.
FIG. 5 is a sectional view taken along line 5-5 of FIG. 3.
FIG. 6 is a perspective view of a vehicular windshield according to the present invention (second embodiment) .
FIG. 7 is an exploded perspective view of the vehicular windshield according to the present invention (second embodiment).
FIG. 8 is a sectional view taken along line 8-8 of FIG. 6.
FIG. 9 is a sectional view of a vehicular windshield which does not form part of the invention (third embodiment).
FIG. 10 is a front view of a prior art scooter type vehicle.

Here, "front", "rear", "left" and "right" are as viewed from the driver. The drawings are to be looked at according to the posture of characters.

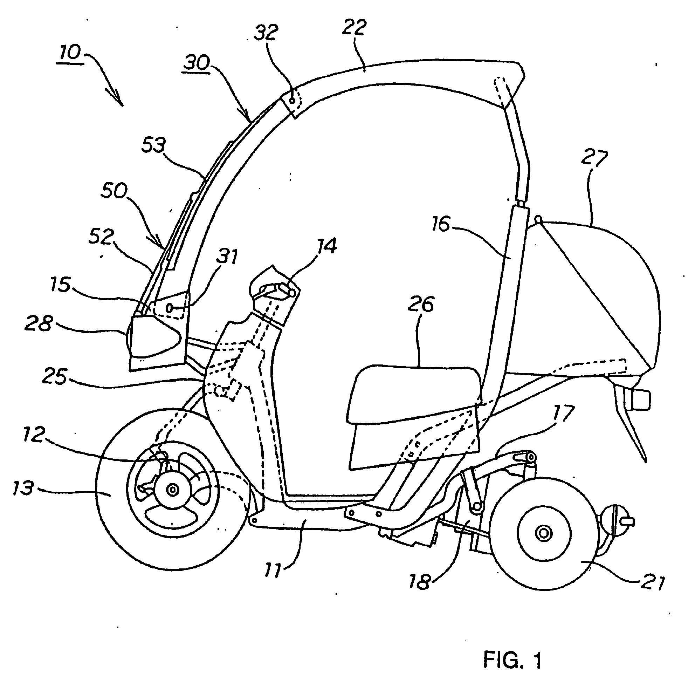

FIG. 1 is a side view of a motor tricycle including a vehicular windshield according to a first embodiment.

The motor tricycle 10 is so constructed that a front wheel 13 is mounted to a vehicle body frame 11 through a swing arm 12, a handle bar 14 and a front frame 15 are connected to an upper portion of the vehicle body frame 11, a pole 16 is connected to a central lower portion of the vehicle body frame 11, a power unit 18 (a combination of an engine and a transmission) is supported by the pole 16 and the vehicle body frame 11 through a lower frame 17, rear wheels 21 are connected to the power unit 18 through an axle shaft 19 (shown in FIG. 2), a roof 22 is connected to the top end of the pole 16, a vehicular windshield (hereinafter referred to as "windshield") 30 is mounted between the roof 22 and the front frame 15, and a wiper 50 is connected to the front frame 15.

Numeral 25 denotes a front cover, 26 a seat, 27 a luggage box, 28 a head light, and symbols 14a denote grips.

FIG. 2 is a front view of the motor tricycle including the windshield according to the first embodiment, and shows the condition where the lower end of the windshield 30 is fastened to the front frame 15 by bolts 31, the upper end of the windshield 30 is fastened to the roof 22 by bolts 32, and the wiper 50 is provided on the front frame 15.
The wiper 50 includes a wiper arm 52 supported by a driving shaft 51, and a wiper blade 53 connected to the top end of the wiper arm 52. The wiper 50 is so constructed that the wiper arm 52 is swung by the driving shaft 51, whereby the surface of the windshield 30 is wiped by the wiper blade 53.

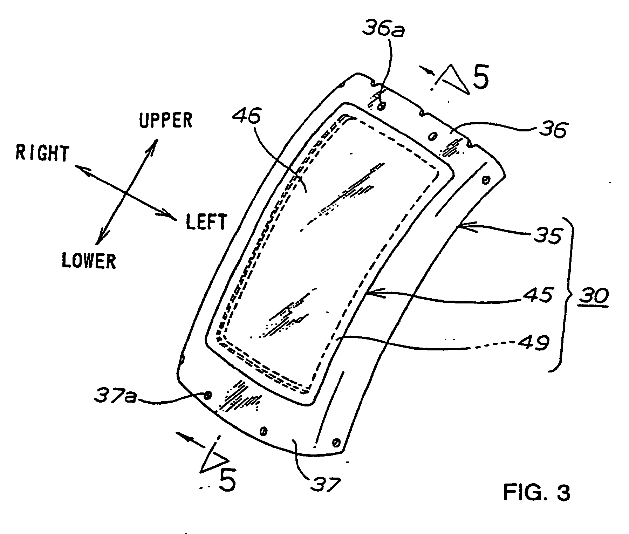

FIG. 3 is a perspective view of the windshield according to the first embodiment.

The windshield 30 is a member comprising a wiper-wiped surface 46 to be wiped by the wiper 50 (shown in FIG. 2), and comprises a transparent resin-made shield main body 35 including mounting portions (upper and lower mounting portions) 36, 37 for mounting the windshield to the vehicle body (the roof 22 and the front frame 15 shown in FIG. 2), a glass plate 45 fastened to the shield main body 35 to form the wiper-wiped surface 46, and an adhesive sheet 49 for fastening the glass plate 45 to the shield main body 35.

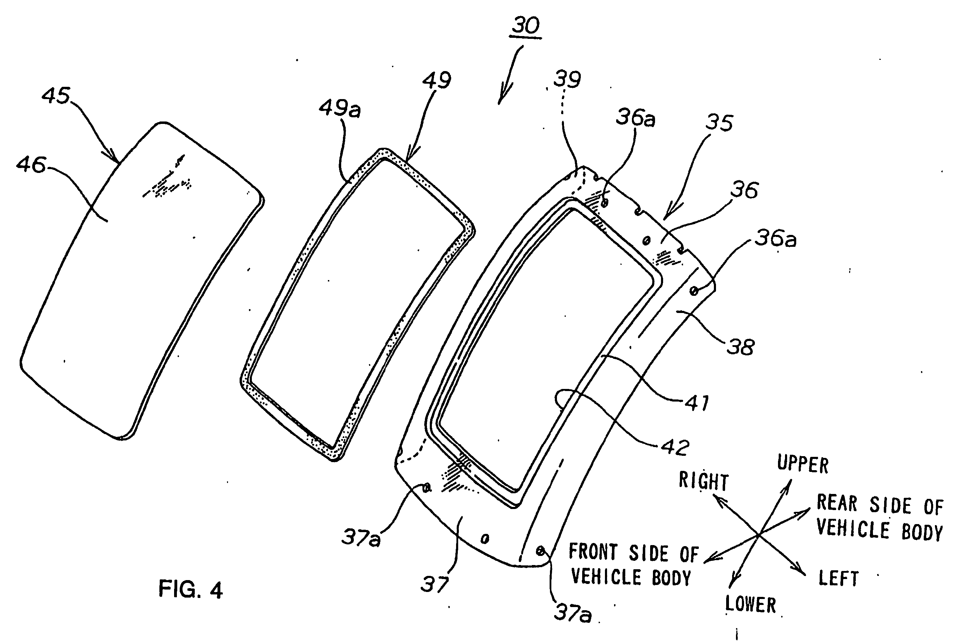

FIG. 4 is an exploded perspective view of the vehicular windshield according to the first embodiment.

The shield main body 35 is formed from a transparent resin such as polycarbonate in a shape curved in the vertical direction, comprises left and right bent portions 38 and 39 bent to the rear side of the vehicle at left and right side portions thereof, and includes the upper and lower mounting portions 36, 37 for mounting the same to the roof 22 and the front frame 15 (shown in FIG. 2) respectively at the upper and lower ends thereof.
The upper mounting portion 36 includes four mounting holes 36a for mounting the windshield main body to the roof 22, and the lower mounting portion 37 includes four mounting holes 37a for mounting the windshield main body to the front frame 15..

Further, the shield main body 35 is provided at its center with a picture frame-like frame 41 and an opening 42 for fitting the glass plate 45. The frame 41 is a stepped portion formed in the shape of a rectangular frame body so that the glass plate 45 can be fitted into the stepped portion, and the inner periphery of the frame 41 defines a rectangular opening 42.

The adhesive sheet 49 is a transparent sheet formed in the shape of the same rectangular frame body as the frame 41 of the shield main body 35, and is a member which can be disposed on the frame 41 of the shield main body 35.

The glass plate 45 is formed in a rectangular shape so that it can be fitted in the opening 42 of the shield main body 35, namely, the outer periphery of the glass plate 45 can be fitted into the stepped portion of the frame 41 of the shield main body 35.
The glass plate 45 may be, for example, a glass laminate or a tempered glass.

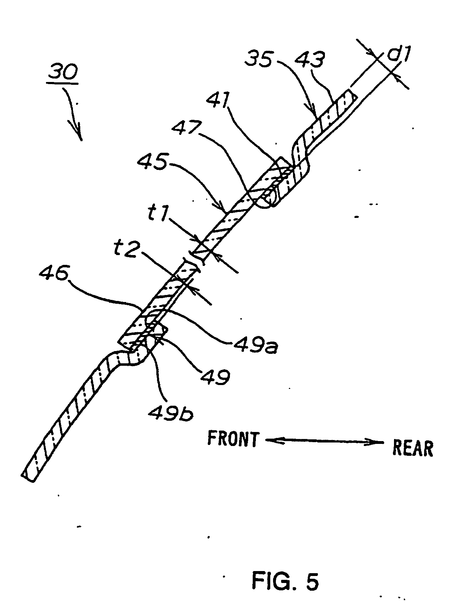

FIG. 5 is a sectional view taken along line 5-5 of FIG. 3, and shows the condition where the front surface 49a of the adhesive sheet 49 is bonded to the back side outer periphery 47 of the glass plate 45 and the back surface 49b of the adhesive sheet 49 is bonded to the frame 41 of the shield main body 35.
The stepped portion depth d1 of the frame 41 is set to be roughly equal to the sum (t1 + t2) of the thickness t1 of the glass plate 45 and the thickness t2 of the adhesive sheet 49. Accordingly, the shield main body 35 can be fitted onto the glass plate 45 so that the wiper-wiped surface (front surface) of the glass plate 45 is flush with the front surface 43 of the shield main body 35.

According to the first embodiment, the shield main body 35 is molded from a transparent resin, and the glass plate 45 is fastened to the shield main body 35. In addition, the glass plate 45 is wiped by the wiper 50 (shown in FIG. 2). Therefore, the wiper-wiped surface 46 can be constituted of the surface of the glass plate 45, so that the hardness of the wiper-wiped surface 46 can be made to be sufficiently high. Accordingly, it is unnecessary to form a hard coating on the wiper-wiped surface 46.

Besides, in the windshield 10, the glass plate 45. is used at only the wiper-wiped surface 46, and the other portions (shield main body 35) are formed from the lightweight transparent resin. Therefore, it is possible to suppress a rise in the weight of the windshield 10.
In addition, since what is necessary is just to bond the glass plate 45 to only the frame 41 of the windshield main body 35, the process of bonding the glass plate 45 can be easily carried out without much labor.

Further, by providing the windshield main body 35 in the periphery of the glass plate 45, the windshield main body 35 can function also as a window frame. Therefore, shock absorption by the windshield main body 35 can be contrived, so that the glass plate 45 can be protected sufficiently.
In addition, by surrounding the periphery of the glass plate 45 by the windshield main body 35, when an external force is applied from a lateral side of the windshield main body 35, a side portion of the windshield main body 35 is deformed, whereby the shock onto the glass plate 45 can be alleviated.

Next, a second embodiment and a third embodiment will be described. As to the same members as in the first embodiment, the same symbols as used above are applied and description thereof will be omitted.

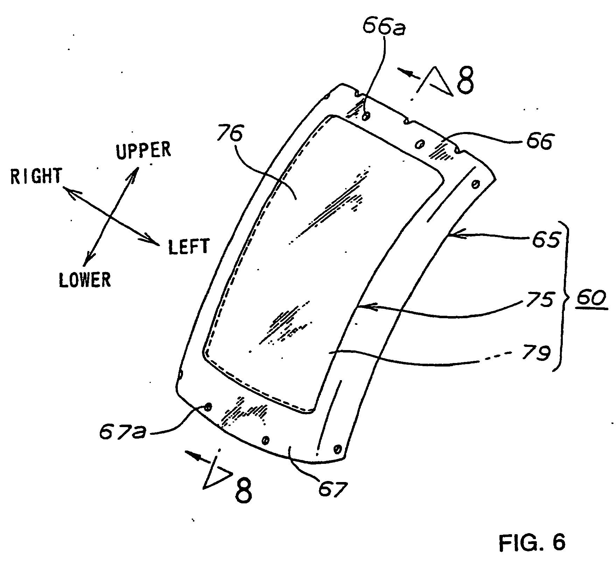

FIG. 6 is a perspective view of the windshield for vehicle according to the present invention (second embodiment).
The windshield 60 is a member including a wiper-wiped surface 76 to be wiped by the wiper 50 (shown in FIG. 2), and includes a transparent resin-made windshield main body 65 having mounting portions (upper and lower mounting portions) 66, 67 for mounting the windshield to the vehicle body (the roof 22 and the front frame 15 shown in FIG. 2), a glass plate 75 fastened to the windshield main body 65 to form the wiper-wiped surface 76, and an adhesive sheet 79 for fastening the glass plate 75 to the windshield main body 65.

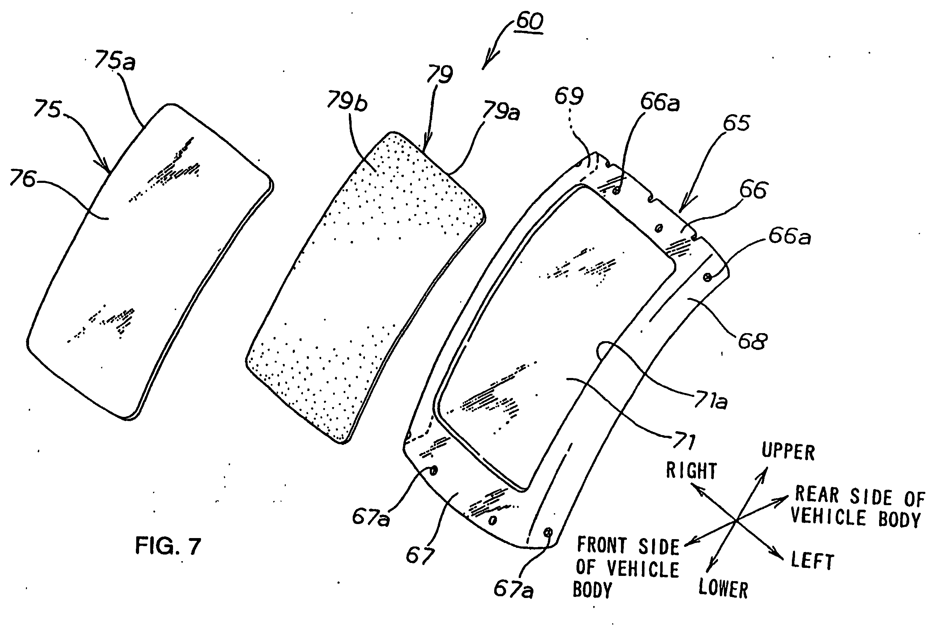

FIG. 7 is an exploded perspective view of the windshield for vehicle according to the present invention (second embodiment).
The windshield main body 65 is formed from a transparent resin such as polycarbonate in a shape curved in the vertical direction. The windshield main body 25 includes left and right bent portions 68, 69 bent to the rear side of the vehicle at left and right side portions thereof, and upper and lower mounting portions 66, 67 for mounting the windshield main body to the roof 22 and the front frame 15 (shown in FIG. 2) respectively at the upper and lower ends thereof.
The upper mounting portion 66 has four mounting holes 66a for mounting the windshield main body to the roof 22, and the lower mounting portion 67 has four fitting holes 67a for mounting the windshield main body to the front frame 15.

Further, the windshield main body 67 is provided at its center with a recessed portion 71 corresponding to an outer frame 75a and the thickness of the glass plate 75 in order to fit the glass plate 75 therein. The recessed portion 71 is formed in a rectangular shape.
Namely, an outer frame 71a of the recessed portion 71 is formed corresponding to the outer frame 75a of the glass plate 75 and slightly larger than the outer frame 75a, and the depth of the recessed portion 71 is set corresponding to the thickness of the glass plate 75 and set to be slightly (by the thickness of the adhesive sheet 79) larger than the thickness of the glass plate 75.

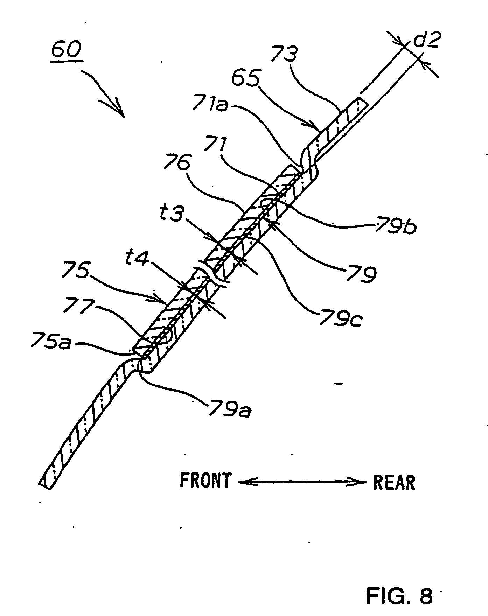

The adhesive sheet 79 is a rectangular transparent sheet of which an outer frame 79a is formed to be slightly smaller than the outer frame 71a of the recessed portion 71 and to be equal in size to the outer frame 75a of the glass plate 75.
Since the outer frame 79a of the adhesive sheet 79 is formed equal in size to the outer frame 75a of the glass plate 75, the front surface 79b of the adhesive sheet 79 can be bonded to the whole area of the back surface 77 (shown in FIG. 8) of the glass plate 75. In addition, since the outer frame 79a of the adhesive sheet 79 is formed slightly smaller than the outer frame 71a of the recessed portion 71, the back surface 79c (shown in FIG. 8) of the adhesive sheet 79 can be bonded to the whole area of the recessed portion 71 of the windshield main body 65.

The glass plate 75 is a rectangular plate material having the outer frame 75a formed slightly smaller than the outer frame 71a of the recessed portion 71, and may be, for example, a glass laminate or a tempered glass.
As the glass plate 75, an ordinary plate glass can be used, on the ground which will be detailed referring to FIG. 8.

FIG. 8 is a sectional view taken along line 8-8 of FIG. 6, and shows the condition where the front surface 79b of the adhesive sheet 79 is bonded to the back surface 77 of the glass plate 75, and the back surface 79c of the adhesive sheet 79 is bonded to the recessed portion 71 of the windshield main body 65.
The stepped portion depth d2 of the recessed portion 71 is set to be roughly equal to the sum (t3 + t4) of the thickness t3 of the glass plate 75 and the thickness t4 of the adhesive sheet 79. Therefore, the glass plate 75 can be fitted so that the wiper-wiped surface (front surface) 76 of the glass plate 75 is flush with the front surface 73 of the windshield main body 65.

Here, the reason why an ordinary plate glass can be used as the glass plate 75 will be described.
By fitting the glass plate 75 into the recessed portion 71 of the windshield main body 65, the whole area of the bask surface 77 of the glass plate 75 can be bonded to the whole area of the recessed portion 71 through the adhesive sheet 79. Therefore, a three-layer structure consisting of the glass plate 75, the adhesive sheet 79 and the recessed portion 71 is obtained, whereby the same constitution as that of a glass laminate can be obtained. Accordingly, an ordinary plate glass can be used as the glass plate 75, and the cost of the windshield 60 can be suppressed.

According to the second embodiment, in the same manner as in the first embodiment, the wiper-wiped surface 76 can be constituted of the surface of the glass plate 75, so that the hardness of the wiper-wiped surface 76 can be enhanced sufficiently. Therefore, it is unnecessary to form a hard coating on the wiper-wiped surface 76.
In addition, in the windshield 69, the glass plate 75 is used only at the wiper-wiped surface 76, and the other portions (windshield main body 65) are formed from a lightweight transparent resin. Therefore, the weight of the windshield can be restrained from increasing.

Besides, since the windshield main body 65 is provided in the periphery of the glass plate 75, the windshield main body 65 can function also as a window frame. Therefore, shock absorption by the windshield main body 65 can be contrived, and the glass plate 75 can be protected sufficiently.
Further, by fitting the glass plate 75 into the recessed portion 71 of the windshield main body 65, the whole surface of the glass plate 75 can be bonded to the recessed portion 71. Therefore, the glass plate 75 can be reinforced with the transparent resin, so that the thickness t3 of the glass plate 75 can be reduced. Accordingly, the weight of the windshield 60 can be reduced efficiently.

Besides, since the glass plate 75 can be made to be thin, the glass plate 75 can easily follow up to deformation when, for example, a torsional deformation is applied to the windshield 60, which is further advantageous regarding protection of the glass plate 75.

In addition, since the periphery of the glass plate 75 is surrounded by the windshield main body 65, when an external force is applied from a lateral side of the windshield main body 65, for example, a side portion of the windshield main body 65 is deformed, whereby shock upon the glass plate 75 can be alleviated.

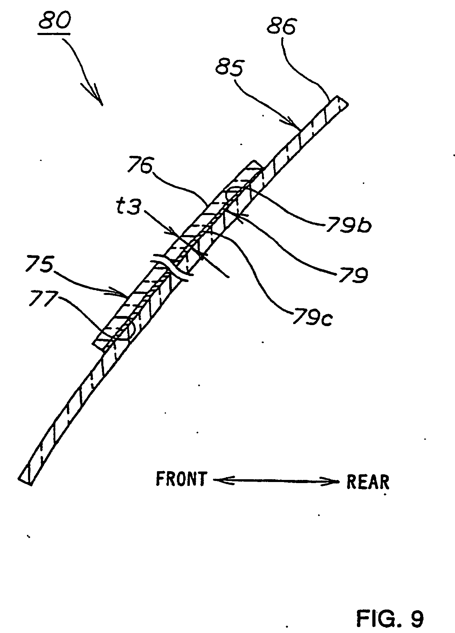

FIG. 9 is a sectional view of the windshield for vehicle according to the third embodiment.

The windshield 80 is so constructed that the windshield main body 65 in the second embodiment is replaced by a transparent resin-made windshield main body 85, and a glass plate 75 is fastened to the front surface 86 of the windshield main body 85 through an adhesive sheet 79, the others being the same as in the second embodiment.

The windshield main body 85 may be obtained by removing the recessed portion 71 from the windshield main body 65 of the second embodiment, the other portions taking the same shape as in the windshield main body 65.

According to the third embodiment, the same effects as in the second embodiment can be obtained; in addition, it is needless to provide the windshield main body 85 with a recessed portion for fitting the glass plate 75 therein, so that the windshield main body 85 can be formed more easily. Therefore, the cost of the windshield 80 can be further suppressed.

Incidentally, while in the above embodiments examples of applying the windshield for vehicle according to the present invention to a motor tricycle have been described, the windshield for vehicle can also be applied to, for example, motorcycles, automobiles and the like.
Besides, while examples of forming the windshield main body from a transparent resin such as polycarbonate have been described, the windshield main body can be formed from other resins.
The invention provides a vehicular windshield which can eliminate the need for a hard coating and can suppress a rise in weight.
To achieve this, a vehicular windshield 30 is a member including a wiper-wiped surface 46 to be wiped by a wiper 50, and includes a transparent resin-made windshield main body 35 having upper and lower mounting portions 36, 37 for mounting the windshield main body to a roof 22 and a front frame 15, a glass plate 45 fastened to the windshield main body 35 to form the wiper-wiped surface 46. and an adhesive sheet 49 for fastening the glass plate 45 to the windshield main body 35.

## Claims

1. A windshield for a vehicle, comprising:
a windshield main body (65) molded from a transparent resin;
a mounting portion (66,67) for mounting said windshield main body (65) to a vehicle main body; and
a glass plate (75) fastened to said windshield main body (65) and including front surface (76) to be wiped by a wiper (50) and a back surface (77), wherein said wind shield main body (65) is provided with a recessed portion (71) corresponding to the thickness of said glass plate (75), and said glass plate (75) is fitted in said recessed portion (71),
**characterized in that** the whole area of said back surface (77) of said glass plate (75) is fitted onto the whole area of said recessed portion (71).

2. A windshield for a vehicle as set forth in claim 1, wherein said glass plate (75) is fixed to said recessed portion (71) by a transparent adhesive sheet (79) forming a three-layer structure, wherein the transparent adhesive sheet (79) is equal in size to the glass plate (75).

## Patentansprüche

1. Windschutzscheibe für ein Fahrzeug, umfassend:
einen Windschutzscheibenhauptkörper (65), der aus transparentem Harz geformt ist;
einen Montageabschnitt (66, 67) zum Anbringen des Windschutzscheibenhauptkörpers (65) an einem Fahrzeughauptkörper; und
eine Glasplatte (75), die an dem Windschutzscheibenhauptkörper (65) befestigt ist und eine von einem Wischer (50) zu wischende Vorderseite (76) und eine Rückseite (77) aufweist, worin der Windschutzscheibenhauptkörper (65) mit einem der Dicke der Glasplatte (75) entsprechenden vertieften Abschnitt (71) versehen ist, und die Glasplatte (75) in den vertieften Abschnitt (71) eingesetzt ist,
**dadurch gekennzeichnet, dass** die Gesamtfläche der Rückseite (77) der Glasplatte (75) auf die Gesamtfläche des vertieften Abschnitts (71) gesetzt ist.

2. Windschutzscheibe für ein Fahrzeug nach Anspruch 1, worin die Glasplatte (75) an dem vertieften Abschnitt (71) durch eine transparente Haftschicht (79) befestigt ist, um eine dreilagige Struktur zu bilden, wobei die transparente Haftschicht (79) die gleiche Größe wie die Glasplatte (75) hat.

## Revendications

1. Pare-brise pour véhicule, comprenant :
un corps principal de pare-brise (65) moulé à partir d'une résine transparente ;
une partie de montage (66, 67) pour monter ledit corps principal de pare-brise (65) sur un corps principal de véhicule ; et
une plaque de verre (75) fixée sur ledit corps principal de pare-brise (65) et comprenant une surface avant (76) destinée à être essuyée par un essuie-glace (50) et une surface arrière (77), dans lequel ledit corps principal de pare-brise (65) est prévu avec une partie enfoncée (71) correspondant à l'épaisseur de ladite plaque de verre (75), et ladite plaque de verre (75) est montée dans ladite partie enfoncée (71),
**caractérisé en ce que** toute la surface de ladite surface arrière (77) de ladite plaque de verre (75) est montée sur toute la surface de ladite partie enfoncée (71) .

2. Pare-brise pour véhicule selon la revendication 1, dans lequel ladite plaque de verre (75) est fixée sur ladite partie enfoncée (71) par une feuille adhésive transparente (79) formant une structure à trois couches, dans lequel la feuille adhésive transparente (79) a une taille identique à la plaque de verre (75).
